# EUROPEAN PATENT APPLICATION

(11) **EP 2 463 862 A1**
(43) Date of publication of application: **13.06.2012**
(21) Application number: 11184672.1
(22) Date of filing: 11.10.2011
(51) Int. Cl.: G11B 27/34, G06F 17/30, G06F 3/048

(54) **User interface for prioritizing media content**

(30) Priority: 13.12.2010 US 966131
(71) Applicant: Sony Corporation, Tokyo 108-0075 (JP)
(72) Inventor: Trotta, Nicholas, San Francisco, CA California 94114 (US); Bustin, Alexander, San Francisco, CA California 94131 (US); Schwesig, Carsten, San Francisco, CA California 94110 (US)
(74) Representative: McGowan, Cathrine

(57) **Abstract**

Methods and apparatus are provided for presenting a user interface by a device. In one embodiment a method includes detecting a user selection associated with a media title of a user interface displayed by the device, determining rankings of one or more association categories for the media title, wherein rankings are determined based on scoring of a plurality of association categories relative to characteristics of the media title, and displaying a graphical element associated with the media title based on the user selection. The method may further include displaying one or more graphical elements for a plurality of' association categories based on the scoring, wherein the one or more graphical elements are displayed based on rank of the association categories relative to the media title.

## Description

This application is related to commonly-assigned and concurrently filed U.S. Patent Application Ser. No 12/966.150. entitled "User Interface for Media Content Presentation"..

### INTRODUCTION

The present disclosure relates generally to presentation of user interface elements, and more particularly to methods and apparatus for displaying graphical elements based on one or more attributes of a selected media title.

### BACKGROUND

Typical methods of providing a user interface for a device are usually directed to device operation for playback of a single media file or source As such, many conventional user interface controls are directed to functions for playback of a single media title. Some conventional devices provide graphical menus for selection of particular media files, However, these conventional methods and devices are limited in their ability to present a plurality of media titles to a user. As a result, viewing and selecting a media title may be difficult for many users.

With the development of network based services, many providers of media content allow for users to purchase and/or rent media content from a display device. Conventional approaches generally provide a web based interface for selecting media, However, the conventional user interfaces and devices may not be suitable for presenting many files. In many instances, users desire the ability to browse a plurality of media files for rent and/or purchase on a display device via device input controls.

Another drawback of the conventional methods for presenting media titles is the ability to suggest media titles for presentation. Typically, categorization of media tittles is limited to alphabetical order or limited categories. Further, these conventional methods do not allow for determining one or more media titles based on user operation of a user interface-Thus, there is a desire for a user interface that allows for selection and presentation of media that overcomes one or more of the aforementioned drawbacks

### BRIEF SUMMARY OF THE EMBODIMENTS

Aspects of the invention are defined in the appended claims.

Disclosed and claimed herein are methods and apparatus for presenting a user interface by a device. In one embodiment, a method includes detecting a user selection associated with a media title of a user interface displayed by the device, determining rankings of one or more association categories for the media title, wherein ranking are determined based on scoring of a plurality of association categories relative to characteristics of the media title, and displaying, by the device, a graphical element associated with the media title based on the user selection. The method may further include displaying, by the device, one or more graphical elements for a plurality of association categories based on the scoring, wherein the one or more graphical elements are displayed based on rank of the association categories relative to the media title.

Other aspects, features, and techniques of the disclosure will be apparent to one skilled in the relevant art in view of the following detailed description of the embodiments.

### BRIEF DESCRIPTION OF THE DRAWINGS

The features, objects, and advantages of the present disclosure will become more apparent from the detailed description set forth below when taken in conjunction with the drawings in which like reference characters identify correspondingly throughout and wherein:
FIG. 1 depicts a graphical representation of a user interface according to one embodiment;
FIG. 2 depicts a simplified block diagram of a device according to one embodiment;
FIG. 3 depicts a process for displaying a user interface according to one embodiment;
FIG. 4 depicts a graphical representation of pivot connection categories according to one or more embodiments;
FIG. 5 depicts a graphical representation of a user interface according to another embodiment;
FIG. 6 depicts a graphical representation of a user interface according to another embodiment;
FIG. 7 depicts a graphical representation of a user interface according to another embodiment; and
FIG. 8 depicts a graphical representation of a process for user interface operation according to another embodiment.

### DETAILED DESCRIPTION OF THE EXEMPLARY EMBODIMENTS

### Overview and Terminology

One aspect of the present disclosure relates to displaying a user interface to present a one or more media titles. In one embodiment, a method is provided to selectively display one or more media titles and/or association categories determined based on a user selection of the user interface and scoring associations of the media title. Graphical display of elements for the associations may be displayed as in addition to graphical elements associated with media titles presented by a user interface. The association categories and associated media titles may be displayed as graphical elements, or one or more pivot connection elements. The pivot connection elements may be displayed for selection by a user to explore media content. One advantage of the invention may be provided by prioritizing the display of pivot connections. For example, based on user selection of a graphical element associated with a media title, one or more media titles may be scored. Based on rank of the scored media titles, one or more association categories may be displayed for a user. Alternatively, or in combination, one or more association categories may be scored based on user selection of a graphical element associated with a media title. Based on rank of the scored association categories, one or more association categories may be displayed for a user. Display of the user interface may then include one or more pivot connection elements that a user may select to view one or more media titles.

In one embodiment, media titles may be individually scored based on a particular pivot connection category associated with one or more attributes of a selected media title. Display of graphical elements of the media title within a pivot connection element may be based on the media title score. Based on user selection of a pivot connection element, the user interface may be configured to display graphical elements in one or more of a detailed view, grid unit formation and spiral formation for user presentation.

As used herein, the terms "a" or "an" shall mean one or more than one. The term "plurality" shall mean two or more than two. The term "another" is defined as a second or more. The terms "including" and/or "having" are open ended (e.g., comprising), The term "or" as used herein is to be interpreted as inclusive or meaning any one or any combination. Therefore, "A, B or C" means "any of the following: A; B; C; A and B; A and C; B and C; A, B and C". An exception to this definition will occur only when a combination of elements, functions, steps or acts are in some way inherently mutually exclusive.

Reference throughout this document to "one embodiment," "certain embodiments," "an embodiment," or similar term means that a particular feature, structure, or characteristic described in connection with the embodiment is included in at least one embodiment of the present disclosure Thus, the appearances of such phrases in various places throughout this specification are not necessarily all referring to the same embodiment. Furthermore, the particular features, structures, or characteristics may be combined in any suitable manner on one or more embodiments without limitation.

In accordance with the practices of persons skilled in the art of computer programming, the disclosure is described below with reference to operations that are performed by a computer system or a like electronic system. Such operations are sometimes referred to as being computer-executed. It will be appreciated that operations that are symbolically represented include the manipulation by a processor, such as a central processing unit, of electrical signals representing data bits and the maintenance of data bits at memory locations, such as in system memory, as well as other processing of signals. The memory locations where data bits are maintained are physical locations that have particular electrical, magnetic, optical, or organic properties corresponding to the data bits..

When implemented in software, the elements of the disclosure are essentially the code segments to perform the necessary tasks. The code segments can be stored in a processor readable medium, which may include any medium that can store or transfer information. Examples of the processor readable mediums include an electronic circuit, a semiconductor memory device, a read-only memory (ROM), a flash memory or other non-volatile memory, a floppy diskette, a CD-ROM, an optical disk, a hard disk, etc.

### Exemplary Embodiment

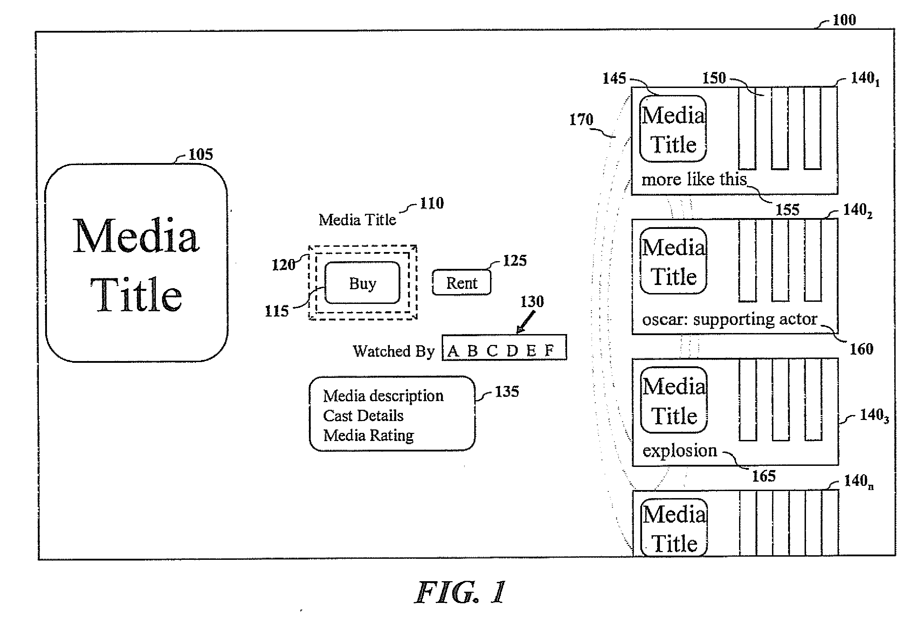

Referring now to the figures, FIG. 1 depicts a graphical representation of a user interface according to one embodiment. As depicted, user interface **100** includes a graphical element associated with a media title shown as **105.** User interface **100** may be displayed to provide one or more details associated with media title **105** and one or more association categories. In one embodiment, media title **105** may be displayed based on a user selection of user interface **100,** such as selection of the media title from a plurality of media titles. User interface **100** may provide detailed information associated with media title **105** and allow for one or more functions to be performed based on user selections.

User interface **100** depicts a detailed view of media title **105** according to one embodiment. In that fashion user interface **100** may be displayed by a device to provide information associated with media title **105** to inform a user for purchase, rent or viewing information Graphical display of media title **105** may relate to artwork (e.g., cover art) associated with the media title and in some instance include text or graphics to identify the media titte. User interface **100** may further display text associated with a media title shown as **110,** and may further include one or more graphical elements which may be selected and employed by a user to perform functions associated with media title **105.**

Graphical display element **115** relates to a buy button which may be selected by the user to purchase media associated with title **105.** Graphical display element **115** is depicted with a selected focus state to include glow accent shown by **120** Graphical display element **125** relates to a selection button which may be selected to rent media title **105.** User interface **100** may further include a plurality of icons, shown by **130,** wherein each icon may be selected as a link to one or more network destinations, such as a social networking site associated with a media title, or source of the media content User interface **100** further includes media data shown as **135** which may be selected and/or viewed by a user to obtain further information or details of media title **105.**

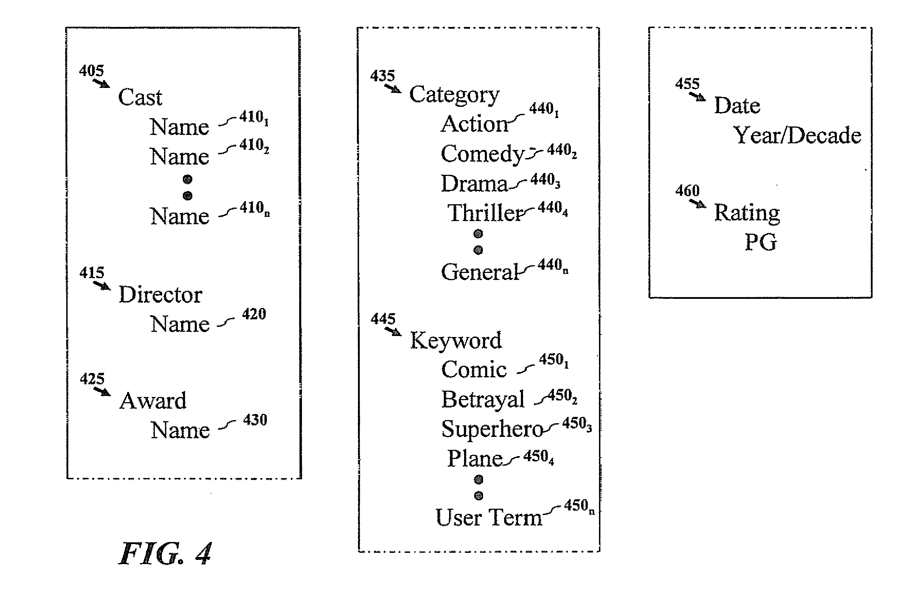

According to one embodiment, one or more graphical elements may be displayed for exploring content associated with media title **105.** For example, one or more media titles may be selected from a media library based on one or more associations determined for media title **105.** An association category may be based on attributes of media titles. For example, attributes for associating media titles may relate to one or more of genre of the media title, specific cast or crew of the media title, contextual similarly to the media title, a keyword of the media title, a rating of the media title, and awards associated with the media title. Providing a graphical element that may be selected by a user to select one or more media titles based on an association attribute may relate to a pivot connection. In one embodiment, user interface **100** may determine and display one or more pivot connections for a user to view media titles. By way of example, when media title **105** relates to a movie, an attribute of media title **105** that may employed to determine a pivot connection includes one or more names of actors related to media title **105.** Based on an actor name, one or more media titles that include that actor may be selected It should also be appreciated that a pivot connection may be based on a plurality of attributes. As will be discussed in more detail below with respect to FIG. 4, pivot connections may be associated with association categories.

User interface **100** may include display of one or more association category elements, shown as **140₁₋ₙ** Each association category element, or pivot, may include a graphical element associated with a media title, shown as **145,** based on similar attributes of the media titles, or pivot connection. Association category elements may further include display of a portion of one or more additional graphical elements associated with additional media titles, shown as **150.** Association category elements may further include a text description to identify a category of the pivot connections. For example, user interface **100** includes association category elements associated with a "more like this' category shown as **155,** award category for supporting actor role, shown as **160,** and keyword category associated with the keyword "explosion" shown as **165.** Based on display of pivot connection elements **140₁₋ₙ**, user interface **100** may allow a user to explore a variety of content based one or more pivot connections to media title **105.** Further, as will be discussed in more detail below, display of association category elements may be based on a priority level assigned to each element. In that fashion, content may be directed to a user. Further, user interface **100** may employ a focus transition of graphical display elements to aid in user navigation. For example, user interface **100** may include a spotlight effect, shown as **170,** to increase the visual appeal of one or more association category elements.

Although user interface **100** is described above with reference to media titles, it should be appreciated that the user interface may be employed for graphical display and/or presentation of different types of elements including but not limited to management files, personal files, data folders, image files, calendar entries, contacts, etc.

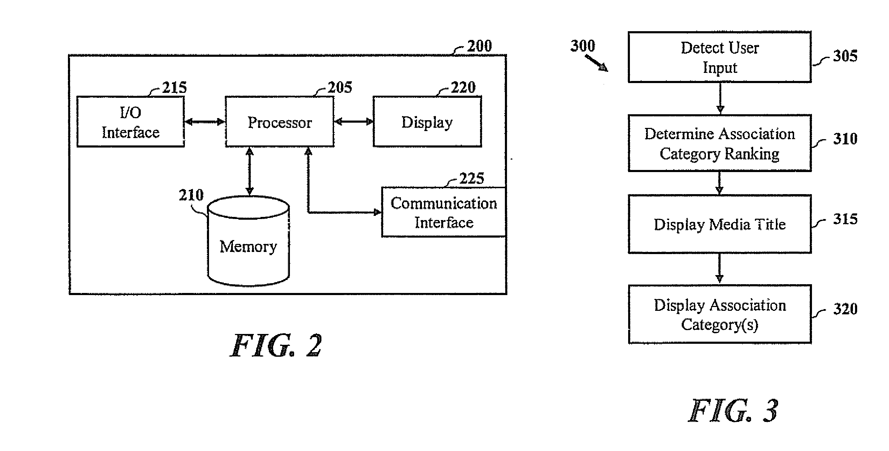

Referring now to FIG. 2, a simplified block diagram is depicted of a device according to one embodiment. In one embodiment, device **200** may be configured to provide a user interface to present media files. Device **200** may further be configured to determine one or more association categories (e.g., pivot connections). In one embodiment, device **200** may relate to a display device, such as a television display for viewing media. Alternatively, device **200** may relate to one or more devices configured to provide data to a display device such as, a set-top box, gaming console, media player (e.g., DVD, Blu-ray™, audio player, etc.), network based communication module, etc. In a further embodiment, device **200** may relate to a portable electronic device such as a media player, personal communication device, etc. Device **200** may be configured to employ one or more of the processes described herein to present a plurality of media titles for a user to view and/or explore media content.

As shown in FIG. 2, device **200** includes processor **205,** memory **210,** input/output (I/O) interface **215,** display **220** and communication interface **225.** Processor **205** may be configured to control operation of device **200** based on one or more computer executable instructions stored in memory **210** Memory **210** may relate to one of RAM and ROM memories and may be configured to store one or more media files, content, and computer executable instructions for operation of device **200.**

I/O interface **215** may include one or more buttons for user input, such as a numerical keypad, volume control, channel control, menu controls, pointing device, track ball, mode selection buttons, and playback functionality (e.g., play, stop, pause, forward, reverse, slow motion, etc). Buttons of I/O interface **215** may include hard and soft buttons, wherein functionality of the soft buttons may be based on one or more applications running on device **200.** IIO interface **215** may be employed for one or more user commands, such as scrolling or selection of a graphical element. I/O interface **215** may additionally be configured to decode one or more remote control commands for navigating a user interface. In another embodiment, device **200** may include one or more optical drives, not shown in FIG. 2, which may be configured to detect and decode one or more media files stored on a disc (e.g., CD, DVD™, Blu-ray™, etc.). Display **220** may be employed to display a user interface. In certain embodiments, display **220** may relate to a touch screen display configured to detect one or more user selections of the display. Although depicted with display **220,** it may be appreciated that the display may be optional in certain embodiments.

Communication interface **225** may be configured to allow for network based communications including but not limited to LAN, WAN, Wi-Fi, etc. In certain embodiments, communication interface **225** may be configured to allow for one or more devices to communicate with device **200** via wired or wireless communication-Communication interface **225** may additionally include one or more ports for receiving data, including ports for removable memory.

Referring now to FIG. 3, a process is depicted for presenting a user interface by a device for exploring content associated with a media title. Process **300** may be performed by the device of FIG. 1 for displaying one or more elements based on associations with a media title, such as pivot connections. Process **300** may be initiated by detecting a user selection at block **305.** The user selection may relate to a selection of a graphical element of the user interface displayed by the device. For example, a user may select a graphical element associated with the media title to view information associated with the title, and/or determine whether to buy or rent the title. According to one embodiment of the invention, user selection of a media title may result in display of one or more graphical elements associated with media titles or association categories.

At block **310,** rankings may be determined for one or more association categories for a media title. The ranking may be determined based on scoring of a plurality of association categories relative to characteristics of the media title. Scoring association categories may include scoring one or more attributes of an association category and/or attributes of media titles relative to a media title associated with the user selection or a category selected by the user. One or more pivot connections may be determined based on the scoring. In order to determine a pivot connection, the device may determine one or more attributes of the selected media title or category.

In one embodiment, a device may determine rankings of association categories based on ranking and scoring data received by the device from a network based service. For example, the device may receive ranking and scoring data for each media title relative to an association category and/or mother media title. The device may determine the ranking data by associating that user selection to received ranking or scoring data. Attribute data may be received from a network based service. A network based service may similarly provide rankings of association categories and scoring data to the device. In that fashion, the device may determine rankings based on received ranking and score data. In that fashion, processing speed may be increased as ranking and scoring data may be available when a user selection is detected.

According to another embodiment, a determining rankings of association categories may be determined by the device. In certain embodiments, the device may determine and store in memory one or more tables including attribute data for a plurality of media titles. In other embodiments, a network server may provide a memory table matching one or more attributes of media titles. Based on the attributes of a media title, one or more association categories or media titles may be selected. Selected media titles may further be arranged based on one or more categories.

In one embodiment, scoring the plurality of media titles may be based on associations of media titles relative to one or more of genre of the media title, specific cast or crew of the media title, contextual similarly to the media title, a keyword of the media title, a rating of the media title, and awards associated with the media title. Scoring the plurality of media titles may include determining highest ranking associations of the media title to each of the plurality of media titles based on rank determined for each media title attribute

Based on the user selection, the device may display a graphical element, such as cover artwork or a graphic tile, for the media title at block **315.** Display of the user interface may include display of one or more association categories, or pivot opportunities, at block **320.** Display of the association categories may include identification of the category, such as text and one or more graphical elements associated with media titles. The graphical elements for the association categories may be displayed to include portions of the media titles that are associated with the category.

Referring now to FIG. 4, a graphical representation is depicted of association categories according to one or more embodiments. According to one embodiment, association categories may be determined for more or media title categories including, cast **405,** director **415,** awards **425,** movie category **435,** keyword category **445,** date **455** and rating **460.** It should also be appreciated that other categories may be employed for arranging association categories. Further, although FIG. 4 is discussed with reference to categories for movie titles, it should be appreciated that association categories may be employed for other types of media and processes for presenting data to a user.

In one embodiment, presentation of association categories may be prioritized. According to another embodiment, a sub-set of association categories determined for a media title may be displayed on the user interface, wherein other association categories may be accessed by user scrolling of a portion of the user interface that includes the categories. Accordingly, FIG. 4 illustrates an exemplary depiction of presentation of one ore more pivot connection categories, wherein prioritization is provided based on presentation order.

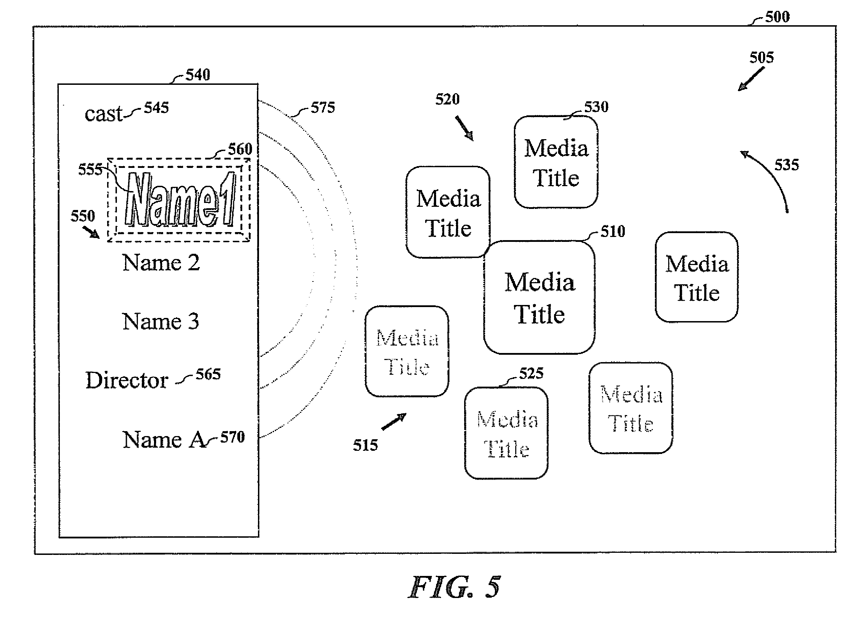

Cast category **405** may be associated with one or more cast members of a movie. The device may be configured to determine one or more cast member names, shown as **410₁₋ₙ**, as an attribute for determining an association, or pivot connection, to another media title. As will be discussed in more detail below with respect to FIG. 5, a user may select an actors name in a menu of the user interface, wherein the user interface may be configured to identify one or more movie titles in which the actor is included. Director category **415** may be employed to identify move titles based on a similar director shown as **420.** In certain instances, awards category **425** may be displayed for selection of media titles that have been awarded a similar movie award. Movie category **435** relates to types of movies, shown as **440₁₋ₙ**, including, action, comedy, drama, thrillers, general categories, etc. Keyword category **445** may be employed to select one or more media titles associated with various characteristics of a movie. Examples depicted in FTG. 4 of keyword attributes include comic based movies **450₁**, movies including betrayal **450₂,** movies including subject matter directed to superheroes **450₃,** movies including a plane **450₄,** and in certain instances a user supplied term shown as **450ₙ**. Media titles may similarly be determined based on data, shown as **455,** and a rating, shown as **460.**

Referring now to FIG. 5, a graphical representation is depicted of a user interface according to another embodiment. Based on user selection of an association category element, the user interface may be configured to present one or more media titles associated with the user selection. User interface **500** depicts one or more graphical display elements to present a plurality of media titles in a particular formation. Graphical elements 505 may relate to a subset of media titles which may be presented to a user. It should also be appreciated that additional, or fewer, media titles may be displayed by user interface 500 in the user interface display window. Media title **510**, for example, may relate to a graphical image and/or text associated with a media title.

User interface **500** may be configured to display graphical elements in a spiral arrangement. The spiral arrangement of FIG. 5 includes first graphical display element **510** displayed in a central position within other spirally arranged graphical display elements. The spiral arrangement may include a plurality of graphical display elements, shown as **515,** each of which having a focus state and a second group of graphical display elements, shown by **520,** with a second focus state. For example, graphical display element **525** associated with the first group **515,** may includes a normal state, wherein focus is off. Media title **530** associated with second group **520,** however, may be displayed with a focused state including focus on. User interface **500** may provide a rotating display of graphical display elements wherein elements of groups **515** and **520** may rotate as shown by direction **535.** User interface **500** may be presented as an animation of graphical display elements, wherein elements related to the first display element **510** appear to be actively added while being viewed.

In certain embodiments, user interface **500** may include menu **540** listing one or more association categories that may be selected by a user. Based on a selected association category, one or more media titles may be displayed. For example, as depicted in FIG. 1, menu **540** is depicted for a cast category of a media title. Display of menu **540** may include identification of the cast category, shown as **545.** User interface **500** may further include one or more pivot connections, shown as **550,** A pivot connection selected by a user, shown as **555,** may be displayed to include a selected focus state including one or more of an increased size, glow accent **560** and transparency setting relative to other pivot connections to identify a particular pivot connection selected. The selected focus state may be applied to other association categories base don user operation of the user interface. According to one embodiment, media titles **505** may be displayed based on selection of pivot connection element **555.** Thus, pivot connection titles **505** may each include the actor associated with pivot connection element **555** as having a role in the media title.

Menu **540** may further include additional pivot connection categories, such as director category **565** and a pivot connection element for the directors name shown as **570.** In a further embodiment, user interface **500** may include spotlight treatment, shown as **575,** to improve the visual appeal of displayed pivot connection elements.

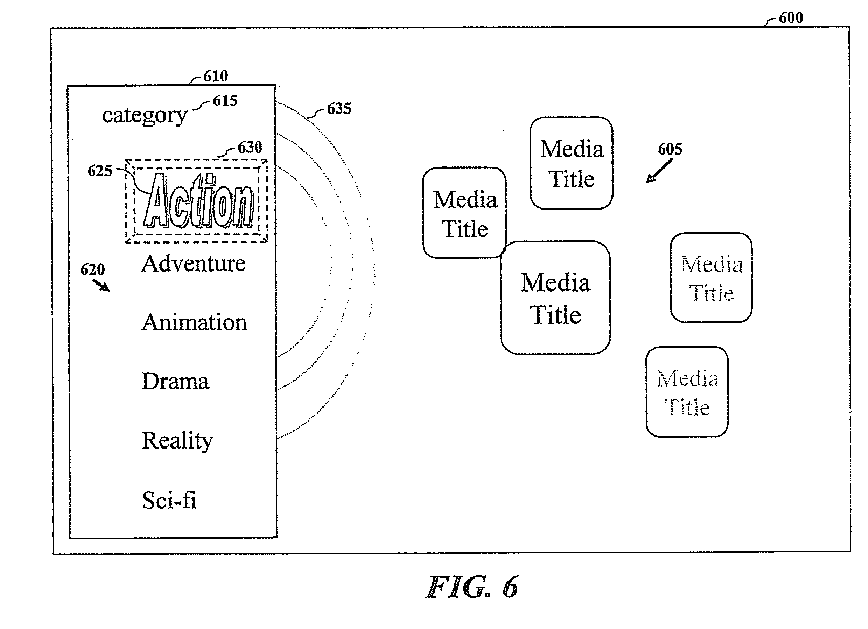

Referring now to FIG. 6, a graphical representation is depicted of a user interface according to another embodiment. Based on user selection of a pivot connection element, the user interface may be configured to present one or more media titles associated with the user selection. FIG. 6 depicts a plurality of media titles each having a focus state and displayed in a spiral formation shown as **605.** User interface **600** additionally includes menu **610** for a pivot connection based on movie categories. Menu **610** may identify the pivot category, shown as **615.** Display of pivot connection category **615** may include a plurality of pivot connection elements shown as **620.** Display of media titles **605** may be based on user selection of pivot connection **625.** User interface **600** may display pivot connection **625** as having a selected focus state including glow accent **630.** User interface **600** may further include glow accent **635.**

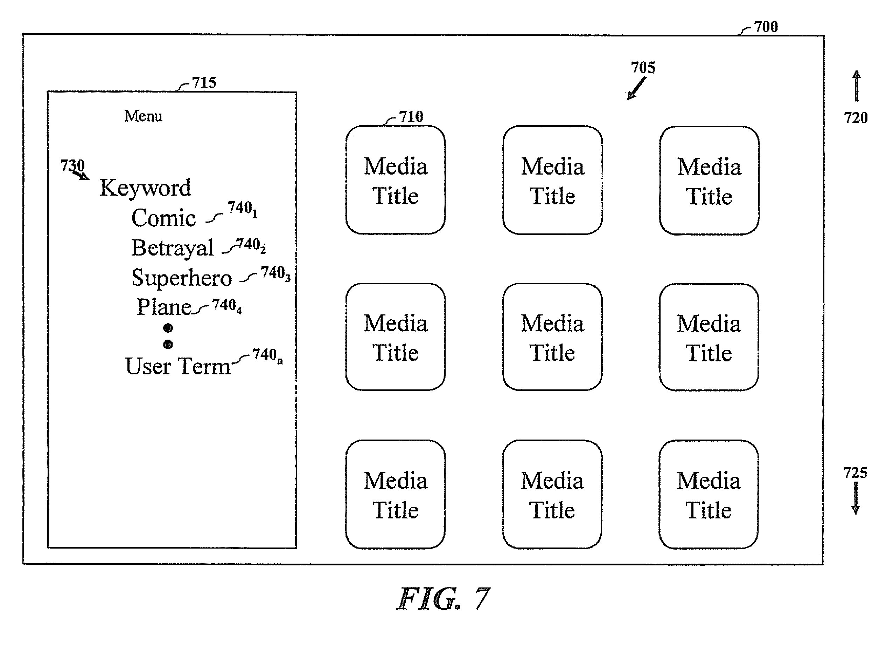

Referring now to FIG. 7, a graphical representation of a user interface is depicted according to another embodiment. Based on user selection of a pivot connection element, user interface **700** may be configured to present one or more media titles associated with the user selection in a grid formation, shown as **705.** FIG. 7 depicts a plurality of media titles, such as media title **710** which may be displayed based on user selection of menu **715** associated with a pivot connection element. When a plurality of media titles are associated with the user selection, user interface **700** may allow for scrolling within the display window as shown by directions **720** and **725.** Menu **715** depicts a keyword pivot connection category to identify one or more media titles based on a keyword pivot connections shown as **740₁₋ₙ.** In certain embodiments, user interface **700** may allow for a user to define a keyword term for a pivot connection as shown by **740_{n.}**

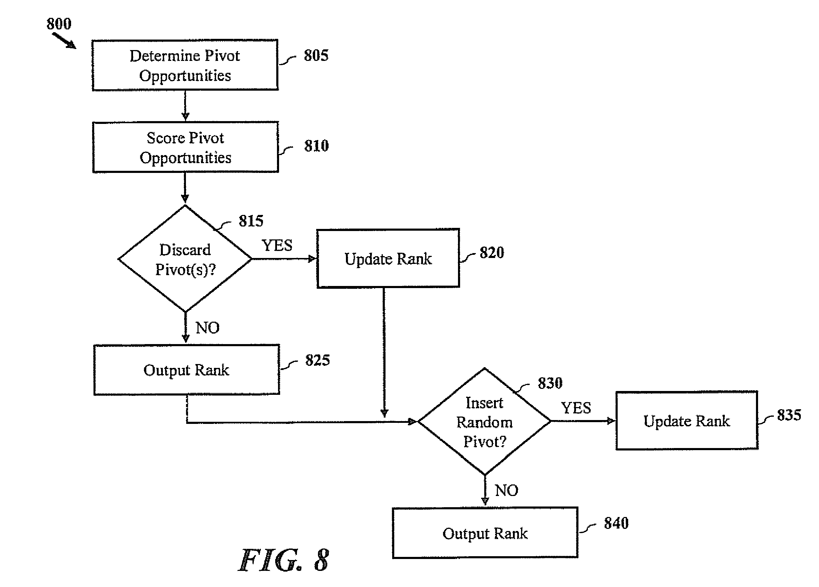

Referring now to FIG. 8, a graphical representation of a process for user interface operation is depicted according to another embodiment- Process **800** may be employed to determine one or more association categories and/or media titles. Based on the scoring of one of more media titles, one or more pivot connections and pivot connection elements may be displayed by a user interface. Process **800** may be initiated by determining pivot opportunities at block **805.** Pivot opportunities may relate to associations between a media title and each of a plurality of media titles, wherein the pivot opportunity may be associated with similar attributes between media titles. A plurality of pivot opportunities may be determined relative to two media titles based on a plurality of similar attributes. Alternatively or in combination, pivot opportunities may relate to association between a media tile and an association category. At block **805,** pivot opportunities may be based on one or more of genre of the media title, specific cast or crew of the media title, contextual similarly to the media title, a keyword of the media title, a rating of the media title, and awards associated with the media title. By determining the pivot opportunities for a media title, one or more media titles and association categories may be suggested or presented to a user.

At block **810,** each pivot opportunity may be scored for a media title. Scoring the plurality of media titles may include determining highest ranking associations of the media title to each of the plurality of media titles based on rank determined for each media title attribute, In one embodiment, collaborative filtering may be employed to score a pivot opportunity based on ore or more associations with a media title, and the strength of the association. Additionally, association categories may additionally be scored based on the number and rank of media titles associated with each association category. In one embodiment, scoring may be based on a percentage value for each association a media title is scored relative to a category. In another embodiment, attribute scores may be combined as a total score for all or a subset of associations.

According to another embodiment, one of more pivot opportunities maybe discarded. For example, an association category having too many, or too little, media titles may be discarded or removed form a presentation list of association categories. At decision block **815,** it may be determined whether to discard one or more pivot opportunities. When one or more pivot opportunities is to be discarded (e.g., "YES" path out of decision block **815),** the rank of remaining association categories and pivot opportunities may be updated at block **820.** When one or more pivot opportunities is to be discarded (e.g., "NO" path out of decision block **815),** the rank of remaining association categories is output at block **825.** Ranking of each pivot opportunity and association category allows for a prioritization of media titles or media title categories to be presented to the user. In contrast to merely associating media titles, categories and titles may be ranked and presented based on one or more of importance, relevance and user entertainment.

According to another embodiment, scored pivot opportunities and association categories may be updated by randomly introducing, or repositioning one or more association categories For example, a pivot category that may include only a high score for one association, the scale being substantially higher than other associations, but appearing with a lower rank may be adjusted to provide a user with a varied experience. At decision block **830,** it may be determined whether to insert a random pivot opportunity or association category. When one or more pivot opportunities are to be inserted (e.g., "YES" path out of decision block **830**), the rank of remaining association categories and pivot opportunities may be updated at block **835** When one or more pivot opportunities is not to be inserted (e.g., "NO" path out of decision block **830)**, the rank of remaining association categories is output at block **840.** It should also be appreciated that scoring and ranking of data determined by process **800** may employed by a network based service to provide to one or more devices for presenting a user interface.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

While this disclosure has been particularly shown and described with references to exemplary embodiments thereof, it will be understood by those skilled in the art that various changes in form and details may be made therein without departing from the scope of the embodiments encompassed by the appended claims.

Various respective aspects and features of the invention are defined in the appended claims. Combinations of features from the dependent claims may be combined with features of the independent claims as appropriate and not merely as explicitly set out in the claims.

## Claims

1. A method for presenting a user interface by a device, the method comprising the acts of:
detecting a user selection associated with a media title of a user interface displayed by the device;
determining rankings of one or more association categories for the media title, wherein ranking are determined based on scoring of a plurality of association categories relative to characteristics of the media title;
displaying, by the device, a graphical element associated with the media title based on the user selection; and
displaying, by the device, one or more graphical elements for a plurality of association categories based on the scoring, wherein the one or more graphical elements are displayed based on rank of the association categories relative to the media title.

2. The method of claim 1, wherein the user selection relates to a selection of a graphical element associated with the media title during display of a plurality of graphical elements by the user interface.

3. The method of claim 1, wherein determining rankings of one or more association categories for the media title is based on ranking and scoring data received by the device from a network based service.

4. The method of claim 1, wherein determining ranking of one or more association categories for the media title is based on ranking and scoring data determined by the device from associated data received from a network based service.

5. The method of claim 1, wherein scoring the plurality of association categories is based on associations of category and media title associations relative to one or more of genre of the media title, specific cast or crew of the media title, contextual similarly to the media title, a keyword of the media title, a rating of the media title, and awards associated with the media title.

6. The method of claim 1, wherein scoring the plurality of association categories includes determining highest ranking associations of the media title to each of the plurality of association categories based on rank determined for each association category.

7. The method of claim 1, wherein scoring the plurality of association categories includes adjusting a rank of one or more association categories to introduce an element of randomness.

8. The method of claim 1, wherein display of the graphical element relates to a graphical representation of one or more of the media title and artwork associated with the media title.

9. The method of claim 1, wherein displaying the one or more graphical elements for the plurality of association categories presents each association category based on rank.

10. The method of claim 1, wherein displaying the one or more graphical elements for the plurality of association categories includes display of a scrollable selection area of the user interface.

11. The method of claim 1, wherein each displayed association category includes a displayed identifier of the association category.

12. The method of claim 1, further comprising detecting a user selection of a graphical element for an association category and displaying one or more graphical elements for media titles associated with the association category in one of a grid formation and spiral formation.

13. The method of claim 1, further comprising displaying an association category menu, wherein a selected association category is displayed with one or more of a glow accent, size adjustment and transparency relative to displayed association categories.

14. A computer program product stored on computer readable medium including computer executable code for presenting a user interface, the computer program product comprising:
computer readable code to detect a user input associated with a selection of a user interface displayed by the device; and
computer readable code executable to implement a method for presenting a user interface by a device according to any one of claims 1 to 13.

15. A device, comprising:
a display;
a memory; and
a processor coupled to the display, and memory, the processor configured to:
detect a user selection associated with a media title of a user interface displayed by the device;
determine rankings of one or more association categories for the media title,
wherein rankings are determined based on scoring of a plurality of association categories relative to characteristics of the media title;
control display of a graphical element associated with the media title based on the user selection; and
control display of one or more graphical elements for a plurality of association categories based on the scoring, wherein the one or more graphical elements are displayed based on rank of the association categories relative to the media title.
